# EUROPEAN PATENT SPECIFICATION

(11) **EP 1 241 802 B1**
(45) Date of publication and mention of the grant of the patent: **03.01.2007**
(21) Application number: 02005254.4
(22) Date of filing: 08.03.2002
(51) Int. Cl.: H04B 7/08, H04B 7/005, H04Q 7/36, H04B 7/06

(54) **Adaptive antenna device and method of controlling the same**
Adaptive Antennenvorrichtung und dazugehöriges Steuerungsverfahren
Appareil d'antenne adaptatif et procédé de commande correspondant

(30) Priority: 12.03.2001 JP 2001069030
(43) Date of publication of application: 18.09.2002
(73) Proprietor: NEC CORPORATION, Tokyo (JP)
(72) Inventor: Takai, Kenichi, NEC Corporation, Minato-ku, Tokyo (JP)
(74) Representative: Vossius & Partner

(56) References cited:
- WO-A-98/16078
- WO-A-99/57820
- US-A- 5 890 067
- US-A- 5 945 948

## Description

The present invention relates to an adaptive antenna device wherein desired directive characteristics can be obtained by respectively controlling the amplitude components and phase components of signals transmitted and received by plural antenna elements. Particularly, the present invention relates to an adaptive antenna device preferably used for mobile communications systems in as CDMA (Code Division Multiple Access) scheme.

Mobile communications systems adopt the cellular scheme. In the cellular scheme, a base station radio communicates with a mobile station within a predetermined area (cell) and distributed base stations provide mobile communication services over the vast area.

The base station, which is used in the cellular scheme, transmits an identification signal under constant power to make a mobile station identify its own cell, using a cell identification channel or a pilot channel. Moreover, the base station transmits common information under constant power, using a notice channel, to catalog the location in each mobile station within its own cell.

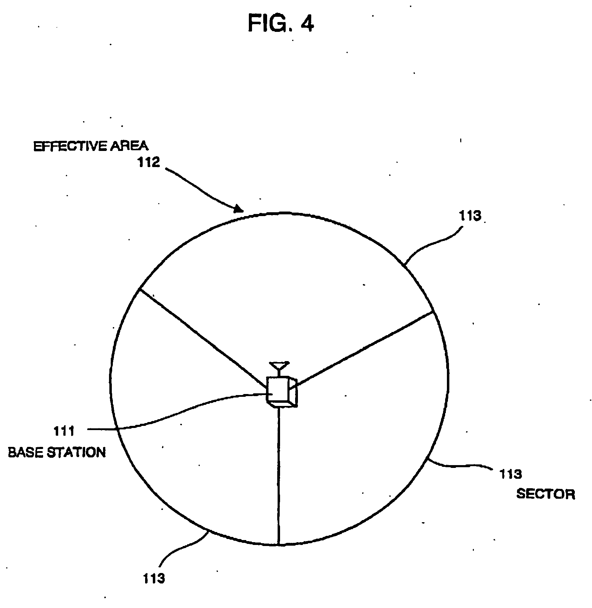

Fig. 4 is a schematic diagram illustrating the state of an ideal cell (area) under Jurisdiction of a base station.

As described above, since the base station transmits the cell identification channel or the notice channel under constant power, the effective area 112 where a mobile station can receive the signals of a fixed communication quality or more becomes circular, as shown in Fig. 4. In the cellular scheme, a cell is generally divided into sub-areas called sectors to provide mobile communications services. Fig. 4 shows the effective area 112 divided into three sectors 113.

In the mobile communications system employing the CDMA scheme, orthogonal codes (or dummy noises) with high auto-correlation and with low cross-correlation and different from each other are allocated to communication channels or mobile stations, respectively. Thus, all mobile stations, which receive mobile communications services, can conduct communications at the same frequency.

Here, the communication quality (Eb/NO) between a mobile station and a base station depends on the signal to interference ratio (SIR), a divergence ratio of an orthogonal code, or the number of mobile stations (mobile station density).

For that reason, even when a base station transmits a cell identification channel and a notice information channel under constant power, the mobile station apart a predetermined distance from a base station sees the communication quality of them which changes with the density of mobile stations. In other words, when the density of mobile stations within or around a cell is low, the cell seems to be large. When the density of mobile stations within or around a cell is high, the cell seems to be small (the cell radius covered by a base station changes). This is called a cell shrinkage (reduction) phenomenon.

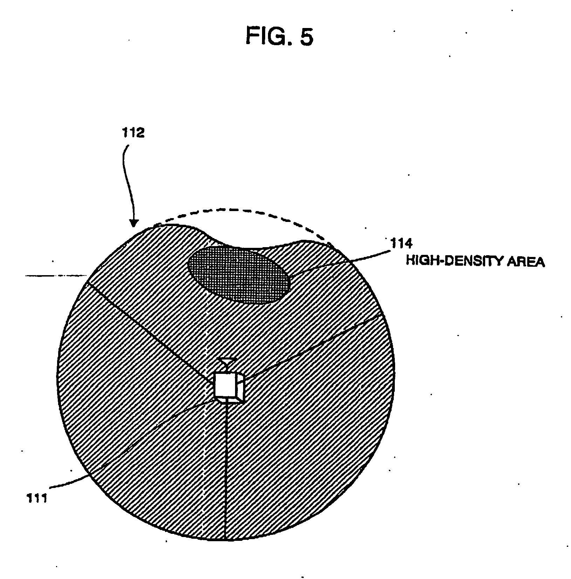

Fig. 5 is a schematic diagram illustrating the cell in which mobile stations densely exist in an area within the cell. For example, when it is assumed that mobile stations concentrate in the high-density area 114, as shown in Fig. 5, the communication channel of a mobile station within the high-density area 114 interferes with the communication channels of other mobile stations. This deteriorates the communication quality of the cell identification channel or the notice information channel and reduces the effective area 112, thus small-sizing the cell in the direction of the high-density area 114 as shown in Fig. 5. As a result, an area where a mobile station cannot receive the cell identification channel and the notice information channel occurs in the direction of the high-density area 114.

As described above, the communication quality deteriorates in an area of a high-mobile station density within or around cell where the shrinkage phenomenon occurs. In consideration of the occurrence of a shrinkage phenomenon, when the transmission power of the cell identification channel or the notice information channel to be transmitted to the cell increases, the communication quality between a base station and a mobile station becomes excessive in an area of a low mobile station density. Consequently, the problem is that the adaptive antenna device is not effective.

WO 99/57820 relates to a method and an apparatus for estimating the downlink signature for a remote transceiver which is part of a wireless communication system that includes a main transceiver for communicating with the remote transceiver. The main transceiver includes an array of transmit antenna elements. The method uses the remote transceiver for receiving signals when the main transceiver transmits downlink calibration signals. When the main transceiver also has a receive antenna array, the remote transceiver can transmit uplink calibration signals to the main transceiver for determining an uplink signature. The downlink and uplink signatures are used to determine a calibration function to account for differences in the apparatus chains that include the antenna elements of the arrays, and that enable downlink smart antenna processing weights to be determined from uplink smart antenna processing weights when the main transceiver includes means for smart antenna processing according to weights.

The object of the present invention is to provide an adaptive antenna device capable of compensating the cell shrinkage phenomenon.

In order to achieve the object, an adaptive antenna device for a base station in a mobile communication system, wherein a plurality of antenna elements are provided and wherein amplitude components and phase components of signals transmitted and received via the antenna elements are respectively controlled to obtain desired directive characteristics, comprises a baseband receiver for creating a control signal and computing estimated arrival direction information being a result of estimating the direction of arrival of radio waves sent out by a mobile station, the control signal respectively controlling the amplitude component and the phase component of a signal received by said adaptive antenna device sent out by a mobile station within a cell to bring the received signal to an optimum communication quality; a storage for temporarily storing the estimated arrival direction information for each of the mobile stations, computed by the baseband receiver; and a controller for computing the density of the mobile stations based on the estimated arrival direction information stored in the storage and controlling the directive characteristic and transmission power of a transmission signal to compensate a shrinkage phenomenon of the cell having an area of a high mobile-station density.

The controller creates a control signal which controls the directive characteristic and the transmission power of a cell identification channel and the directive characteristic and the transmission power of a notice channel, the cell identification channel being used to transmit an identification signal for making a mobile station identify the cell, the notice channel being used to transmit common information for cataloging the location of the mobile station.

Moreover, the controller creates a control signal to control the directive characteristic and the transmission power, whereby a cell is enlarged in the direction of an area having a high density of the mobile stations and whereby cell reduction due to the shrinkage phenomenon is compensated.

The controller transmits transmission signals to compensate a shrinkage phenomenon having the same information and the same phase to the direction of an area having a high density of the mobile stations.

According to the present invention, in a method of controlling an adaptive antenna device in a base station of a mobile communication system including a plurality of antenna elements, wherein amplitude components and phase components of signals transmitted and received via the antenna elements are respectively controlled to obtain desired directive characteristics the method comprises the steps of respectively controlling the amplitude component and the phase components of a signal received by said adaptive antenna device sent out by a mobile station to bring the received signal to an optimum communication quality, and computing estimated arrival direction information being a result of estimating the direction of arrival of radio waves sent out by the mobile station, for each of all mobile stations within a cell; computing the density of the mobile stations based on the estimated arrival direction information computed for each of the mobile stations; and controlling the directive characteristic and transmission power of a transmission signal to compensated a shrinkage phenomenon of the cell having an area of a high mobile-station density.

The transmission signal comprises a cell identification channel being used to transmit an identification signal for making a mobile station identify the cell and a notice channel being used to transmit common information for cataloging the location of the mobile station.

The control method further comprises the step of controlling the directive characteristic and the transmission power of the transmission signal to enlarge a cell in the direction of an area having a high density of the mobile stations and to compensate cell reduction due to the shrinkage phenomenon.

The control method further comprises the step of transmitting transmission signals to compensate a shrinkage phenomenon having the same information and the same phase to the direction of an area having a high density of the mobile stations.

As described above, in the adaptive antenna device and the method of controlling the same, amplitude components and phase components of received signals sent out by mobile stations are respectively controlled to bring the received signals to an optimum communication quality. Moreover, estimated arrival direction information being a result of estimating the direction of arrival of radio waves sent out by the mobile station is computed for each of all mobile stations within a cell. The density of the mobile stations is computed based on the estimated arrival direction information computed for each of the mobile stations. The directive characteristic and transmission power of a transmission signal is controlled to compensate a shrinkage phenomenon of the cell having an area of a high mobile-station density. By doing so, a reduced area in a cell can be restored to the size of its original effective area.

This and other objects, features and advantages of the present invention will become more apparent upon a reading of the following detailed description and drawings, in which:
Fig. 1 is a block diagram illustrating the configuration of an adaptive antenna device according to the present invention.
Fig. 2 is a schematic diagram illustrating the state of a call in which the shrinkage phenomenon is compensated by the adaptive antenna device shown in Fig. 1.
Fig. 3 is a schematic diagram illustrating the state of a cell in which the shrinkage phenomenon is compensated through another process of the adaptive antenna device shown in Fig. 1.
Fig. 4 is a schematic diagram illustrating the state of an ideal cell (area) under the jurisdiction of a base station.
Fig. 5 is a schematic diagram illustrating the state of a cell where mobile stations densely gather in a given area thereof.

In the present invention, an adaptive antenna device has an array antenna constituted of plural antenna elements to compensate a shrinkage phenomenon. By controlling the amplitude component and the phase component of a signal transmitted and received with each antenna element, the array antenna can have a strong directivity or a weak directivity in a specific direction.

Moreover, the adaptive antenna device according to the present invention estimates the direction of arrival of radio waves based on signals transmitted by a mobile station. The density of mobile stations in a cell is obtained using the result of estimating a radio waves arrival direction for each mobile station. The directive characteristic and the transmission power are controlled respectively. Thus, the cell shrinkage phenomenon in the direction of a high mobile station density is compensated when the cell identification channel and the notice information channel are transmitted.

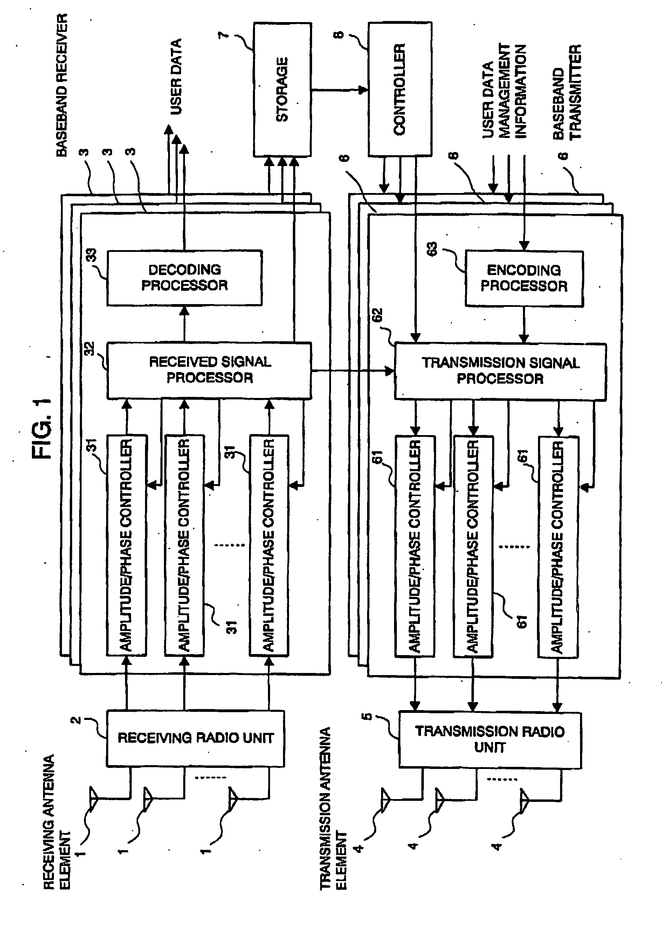

Fig. 1 is a block diagram illustrating the configuration of an adaptive antenna device according to the present invention.

Referring to Fig. 1, an adaptive antenna device according to the present invention includes a plurality of receiving antenna elements 1, a receiving radio unit 2, a plurality of baseband receivers 3, a plurality of transmission antenna elements 4, a transmission radio unit 5, a plurality of baseband transmitters 6, a storage 7, and a controller 8. The plurality of receiving antenna elements 1 construct an array antenna. The receiving radio unit 2 converts a RF frequency band signal transmitted by a mobile station into an IF (Inter Frequency) or baseband signal. Each baseband receiver 3 creates a control signal respectively controlling the amplitude component and the phase component to bring the signal sent by a mobile station to an optimum communication quality and calculates an estimated arrival direction information being a result of estimation the direction of arrival of radio waves sent out by a mobile station, thus decoding user data. The plurality of transmission antenna elements 4 construct an array antenna. The transmission radio unit 5 converts into a RF frequency band signal an IF signal or baseband signal containing user data and management information which is transmitted using a cell identification channel and a notice information channel. Each baseband transmitter 6 creates a control signal respectively controlling the amplitude component and the phase component to bring a transmission signal to a mobile station to an optimum quality and encodes user data. The storage 7 temporarily stores an estimated arrival direction information calculated by the baseband receiver 3. The controller 8 calculates a mobile-station density based on the estimated arrival direction information stored in the storage 7 and creates a control signal controlling the directivity and the transmission power of a cell identification channel and the directivity and the transmission power of a notice information channel to compensate the shrinkage phenomenon of an area of a high mobile-station density.

Each baseband receiver 3 includes plural amplitude/phase controllers 31, a received signal processor 32, and a decoding processor 33. The amplitude/phase controllers 31 are respectively arranged in correspondence to the receiving antenna elements 1. Each amplitude/phase controller 31 adds a predetermined weight to the amplitude component and the phase component of a received signal. The received signal processor 32 synthesizes and selects received signal weighted by the amplitude/phase controller 31. The received signal processor 32 further calculates a weight (control signal) to be added to each amplitude/phase controller 31 to bring a signal transmitted by a mobile station to an optimum communication quality and calculates an estimated arrival direction information being a result of estimating the direction of arrival of radio waves sent out by a mobile station. The decoding processor 33 decodes user data.

Each baseband transmitter 6 includes plural amplitude/phase controllers 61, a transmission signal processor 62, and an encoding processor 63. The amplitude/phase controllers 61 are respectively arranged in correspondence with transmission antenna elements 4. Each amplitude/phase controller 61 adds a predetermined weight to the amplitude component and the phase component of a transmission signal. The transmission signal processor 62 disassembles a transmission signal into signals for respective transmission antenna elements 4 to bring a signal transmitted to a mobile station to an optimum communication quality and calculates a weight to be added to each amplitude/phase controller 61. The encoding processor 63 encodes management information such as a cell identification channel and a notice information channel as well as user data.

Fig. 1 shows three receiving antenna elements 1 and three amplitude/phase controllers 31 in each baseband receiver 3. The number of those constituent elements is not limited provided that the number of receiving antenna elements 1 is equal to the number of amplitude/phase controllers 31. Similarly, Fig. 1 shows three transmission antenna elements 4 and three amplitude/phase controllers 61 in each baseband transmitter 6. The number of those constituent elements is not limited provided that the number of transmission antenna elements 4 is equal to the number of amplitude/phase controllers 61.

Referring to Fig. 1, receiving antenna elements 1 or transmission antenna elements 4 are separately arranged. However, the use of a duplexer allows a receiving antenna element 1 and a transmission antenna element 4 to be shared.

Referring to Fig. 1, three baseband receivers 3 are arranged and three baseband transmitters 6 are arranged elements. However, a baseband receiver 3 and a baseband transmitter 6 are disposed for each mobile station (code) which provides mobile communications services. Hence, the number of baseband receivers 3 is not limited to three and the number of baseband transmitters 6 is not limited to three.

Next, the operation of an adaptive antenna device of the present invention will be described below by referring to Figs. 1, 2 and 3.

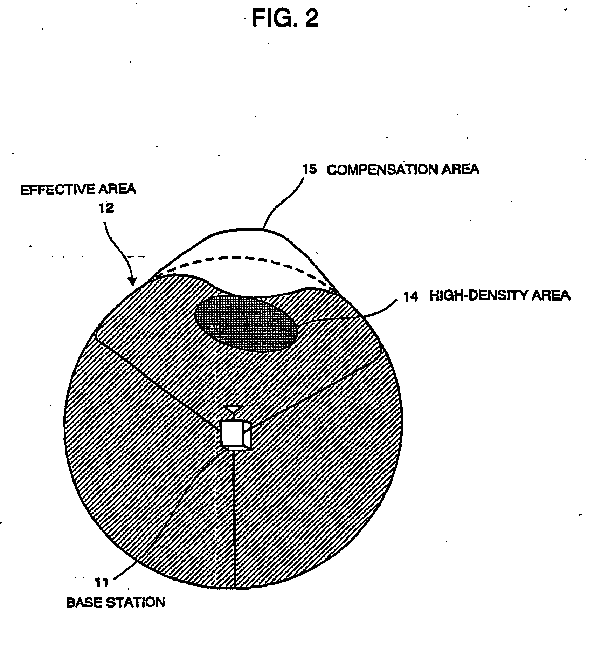

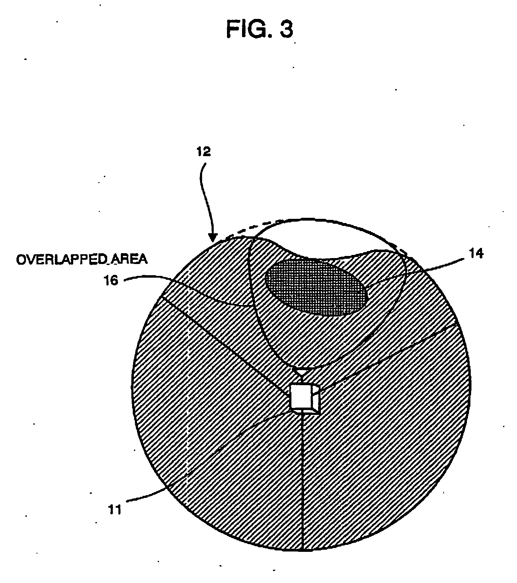

Fig. 2 is a schematic diagram illustrating the cell in which the shrinkage phenomenon is compensated by the adaptive antenna device in Fig. 1. Fig. 3 is a schematic diagram illustrating the cell in which the shrinkage phenomenon is compensated by another process of the adaptive antenna device in Fig. 1.

The receiving radio unit 2 converts signals sent from a mobile station respectively received with plural receiving antenna elements 1 (Fig. 1) from the RF frequency band signals to the IF signals or baseband signals and then inputs them to the amplitude/phase controllers 31 in the baseband receiver 3.

Each amplitude/phase controller 31 adds a predetermined weight obtained by the received signal processor 32 to the amplitude component and the phase component of a received signal and then outputs the weighted signal to the received signal processor 32.

The received signal processor 32 respectively synthesizes the amplitude components and the phase components of weighted signals output from each amplitude/phase controllers 31, maximizes a received signal sent by a desired mobile station, and calculates the location of the desired mobile station (estimated arrival direction information) based on the synthesized value (vector). When only a predetermined receiving antenna element 1 receives the radio waves sent out by a desired mobile station with higher sensitivity, the corresponding received signal is merely selected

The received signal processor 32 calculates the weight of the amplitude component and the weight of the phase component of a signal received by each receiving antenna element 1 to bring to an optimum communication quality a signal from a desired mobile station of signals received by the plural receiving antenna elements 1. Thus the received signal processor 32 transmits the calculated weight value (the control signal) to the corresponding amplitude/phase controller 31.

The received signal processor 32 outputs the synthesized/selected received signal to the decoding processor 33. The decoding processor 33 decodes the received signal into user data and then outputs it to the signal processor (not shown)

The storage 7 holds the information on the estimated direction of arrival of a mobile station, which is calculated by the received signal processor 32. The information on an estimated direction of arrival is calculated for each baseband receiver 3 (for each user). The storage 7 respectively stores sets of information on the estimated direction of arrival of all mobile station within a cell under the jurisdiction of a base station. The information on the estimated direction of arrival of each mobile station may be calculated in sector units shown in Fig. 4.

Either user data or management information such as a cell identification channel or a notice information channel, output from the signal processor (not shown) is input to the encoding processor 63 in each baseband transmitter 6.

The encoding processor 63 subjects received user data or management information to a predetermined encoding process, using an error correction code, and outputs the encoded signal to the transmission signal processor 62.

The transmission signal processor 62 disassembles the encoded signal into signals for respective transmission antenna elements 4, using the estimated mobile-station arrival direction information calculated by the received signal processor 32, to optimize the communication quality to a mobile station. Then the transmission signal processor 62 transmits the disassembled signals to the corresponding amplitude/phase controllers 61, respectively. Moreover, the transmission signal processor 62 calculates the weights (control signals) of amplitude components and the weights (control signals) of phase components to be added to disassembled signals and transmits the control signals to the amplitude/phase controllers 61, together with the disassembled signals.

Each amplitude/phase controller 61 adds a weight to the signal obtained from the transmission signal processor 62 and then outputs the weighted signal to the transmission radio unit 5. The transmission radio unit 5 transmits user data or management information to a mobile station via the plural transmission antenna elements 4.

When the transmission signal is user data (a communication channel), the weights, which are calculated by the transmission signal processor 16 based on the estimated arrival direction information calculated by the received signal processor 32, are respectively added to the amplitude/phase controllers 61 (which is processing the received signal from the mobile station) in the baseband transmitter 6.

When the transmission signal is management information (a cell identification channel or notice information channel), the weights, which are calculated by the controller 8 based on estimate arrival direction information held in the storage 7, are respectively added to the amplitude/phase controllers 61 in the baseband transmitter 6. The transmission signal processor 62 switches the transmission path to input the amplitude/phase controller 61 corresponding to the weight (control signal) transmitted from the controller 8.

The controller 8 calculates the density of mobile stations within the cell of its own base station based on estimated arrival direction information for each mobile station held in the storage 7. The controller estimates an area of a high mobile-station density, or an area where the shrinkage phenomenon develops. Then the controller 8 calculates weights to be sent to each amplitude/phase controller 61 to compensate deterioration of the communication quality of a cell identification channel or notice information channel to be transmitted toward the area.

For example, when mobile stations concentrates in the high density area 14 shown in Fig. 2 and the cell shrinks due to degradation of the communication quality of the cell identification channel or notice information channel, the controller 8 compensates the cell reduction area. That is, the controller 8 controls the directivity and transmission power of a transmission signal with the weight value supplied to each amplitude/phase controller 61 so as to enlarge the cell size in the direction of the high density area 14 (see the compensation area in Fig. 2). Such a process enables to restore the cell to the size of the original effective area 12 (shown with the dotted lines in Fig. 2). Consequently, because only the reduced area of a cell is compensated, the cell shrinkage phenomenon can be effectively overcome.

Moreover, there is another cell-reduction compensation method wherein two baseband transmitters 6 transmit management information such as a cell identification channel or a notice information channel, respectively. For example, it is now assumed that one baseband transmitter 3 transmits the cell identification channel or notice information channel and the cell is reduced because of mobile stations concentrated in the high density area 14 shown in Fig. 3. In such a state, the controller 8 transmits the cell identification channel or the notice information channel in an overlapped mode, in the cell reduction direction, using other baseband transmitter 3 (see the overlapped area 16 in Fig. 3). In this case, the transmission signal to be transmitted has the same information as that in the cell identification channel or in the notice information channel previously transmitted and is set to the same phase.

As described above, even in the method of transmitting, in a superimposed mode, the same signals in the cell reducing direction by means of two baseband transmitters 6, a deteriorated communication quality due to the shrinkage phenomenon can be compensated. Thus, the shape of a cell can be repaired to the original effective area 12 (as shown in dotted lines in Fig. 3).

The present invention with the configuration described above has the following advantages.

The amplitude component and the phase component of a signal transmitted by a mobile station are respectively controlled to obtain an optimum communication quality thereof. Estimated arrival direction information being a result of estimating the direction of arrival of radio waves sent out by a mobile station is calculated for each of all mobile stations within a cell. The mobile station density is calculated based on the estimated arrival direction information calculated for each mobile station. Then, the directivity of a transmission signal and the transmission power thereof are controlled to compensate the cell shrinkage phenomenon in an area of a high mobile station density. By doing so, the cell reduced area can be restored to the original effective area so that the cell shrinkage phenomenon can be effectively compensated.

## Claims

1. An adaptive antenna device for a base station in a mobile communication system, wherein a plurality of antenna elements (1,4) are provided and wherein amplitude components and the phase components of signals transmitted and received via said antenna elements (1,4) are respectively controlled to obtain desired directive characteristics, comprising(3) :
a baseband receiver (3) for creating a control signal and computing estimated arrival direction information being a result of estimating the direction of arrival of radio waves sent out by a mobile station, said control signal respectively controlling the amplitude component and the phase component of a signal received by said adaptive antenna device sent out by a mobile station within a cell to bring said received signal to an optimum communication quality: **characterized by**
a storage (7) for temporarily storing said estimated arrival direction information for each of said mobile stations, computed by said baseband receiver (3); and
a controller (8) for computing the density of said mobile stations based on said estimated arrival direction information stored in said storage (7) and controlling the directive characteristic and transmission power of a transmission signal to compensate a shrinkage phenomenon of said cell having an area of a high mobile-station density (14).

2. The adaptive antenna device defined in Claim 1, wherein said controller (8) creates a control signal which controls the directive characteristic and the transmission power of a cell identification channel and the directive characteristic and the transmission power of a notice channel, said cell identification channel being used to transmit an identification signal for making a mobile station identify said cell, said notice channel being used to transmit common information for cataloging the location of said mobile station.

3. The adaptive antenna device defined in Claim 1 or 2, wherein said controller (8) creates a control signal to control said directive characteristic and said transmission power, whereby a cell is enlarged in the direction of an area having a high density (14) of said mobile stations and whereby cell reduction due to said shrinkage phenomenon is compensated.

4. The adaptive antenna device defined in Claim 1 or 2 wherein said controller (8) transmits transmission signals to compensate a shrinkage phenomenon having the same information and the same phase to the direction of an area having a high density (14) of said mobile stations.

5. A method of controlling an adaptive antenna device in a base station of a mobile communication system including a plurality of antenna elements (1,4), wherein amplitude components and phase components of signals transmitted and received via said antenna elements (1,4) are respectively controlled to obtain desired directive characteristics, said method comprising the steps of:
respectively controlling the amplitude component and the phase component of a signal received by said adaptive antenna device and sent out by a mobile station to bring said received signal to an optimum communication quality, and computing estimated arrival direction information being a result of estimating the direction of arrival of radio waves sent out by said mobile station, for each of all mobile stations within a cell; **characterized by**
computing the density of said mobile stations based on said estimated arrival direction information computed for each of said mobile stations; and
controlling the directive characteristic and transmission power of a transmission signal to compensate a shrinkage phenomenon of said cell having an area of a high mobile-station density (14).

6. The method of controlling an adaptive antenna device defined in Claim 5, wherein said transmission signal comprises a cell identification channel being used to transmit an identification signal for making a mobile station identify said cell and a notice channel being used to transmit common information for cataloging the location of said mobile station.

7. The method of controlling an adaptive antenna device defined in Claim 5 or 6, further comprising the step of controlling said directive characteristic and said transmission power of said transmission signal to enlarge a cell in the direction of an area having a high density (14) of said mobile stations and to compensate cell reduction due to said shrinkage phenomenon.

8. The method of controlling an adaptive antenna device defined in Claim 5 or 6, further comprising the step of transmitting transmission signals to compensate a shrinkage phenomenon having the same information and the same phase to the direction of an area having a high density (14) of said mobile stations.

## Patentansprüche

1. Adaptive Antennenvorrichtung für eine Basisstation in einem Mobilkommunikationssystem, wobei die adaptive Antennenvorrichtung mehrere Antennenelemente (1, 4) aufweist, und wobei Amplitudenkomponenten und Phasenkomponenten von Signalen, die durch die Antennenelemente (1, 4) übertragen und empfangen werden, jeweils derart gesteuert werden, dass eine gewünschte Richtcharakteristik erhalten wird;
wobei die adaptive Antennenvorrichtung ferner aufweist:
einen Basisbandempfänger (3) zum Erzeugen eines Steuersignals und Berechnen einer Information über eine geschätzte Ankunftsrichtung, die als Ergebnis einer Schätzung der Ankunftsrichtung von durch eine Mobilstation übertragenen Funkwellen erhalten wird, wobei das Steuersignal die Amplitudenkomponente bzw. die Phasenkomponente eines durch eine Mobilstation innerhalb einer Zelle übertragenen und durch die adaptive Antennenvorrichtung empfangenen Signals steuert, um das empfangene Signal auf eine optimale Kommunikationsqualität zu bringen;
**gekennzeichnet durch**:
einen Speicher (7) zum Zwischenspeichern der Information über die geschätzte Ankunftsrichtung für jede der Mobilstationen, die **durch** den Basisbandempfänger (3) berechnet wurde; und
einen Controller (8) zum Berechnen der Dichte der Mobilstationen basierend auf der im Speicher (7) gespeicherten Information über die geschätzte Ankunftsrichtung und zum Steuern der Richtcharakteristik und der Sendeleistung eines Sendesignals zum Kompensieren einer Schrumpfungserscheinung der Zelle, die einen Bereich (14) mit einer hohen Mobilstationsdichte aufweist.

2. Adaptive Antennenvorrichtung nach Anspruch 1, wobei der Controller (8) ein Steuersignal erzeugt, das die Richtcharakteristik und die Sendeleistung eines Zellenidentifizierungskanals und die Richtcharakteristik und die Sendeleistung eines Meldungskanals steuert, wobei der Zellenidentifizierungskanal zum Übertragen eines Identifizierungssignals verwendet wird, um zu ermöglichen, dass eine Mobilstation die Zelle identifizieren kann, und wobei der Meldungskanal verwendet wird, um allgemeine Information zum Registrieren der Position der Mobilstation zu übertragen.

3. Adaptive Antennenvorrichtung nach Anspruch 1 oder 2, wobei der Controller (8) ein Steuersignal zum Steuern der Richtcharakteristik und der Sendeleistung erzeugt, wodurch eine Zelle in die Richtung eines Bereichs (14) mit einer hohen Mobilstationsdichte erweitert wird, und wodurch eine aufgrund der Schrumpfungserscheinung verursachte Zellenreduzierung kompensiert wird.

4. Adaptive Antennenvorrichtung nach Anspruch 1 oder 2, wobei der Controller (8) Sendesignale zum Kompensieren der Schrumpfungserscheinung mit der gleichen Information und der gleichen Phase in Richtung eines Bereichs (14) mit einer hohen Mobilstationsdichte überträgt.

5. Verfahren zum Steuern einer adaptiven Antennenvorrichtung in einer Basisstation eines Mobilkommunikationssystems, wobei die adaptive Antennenvorrichtung mehrere Antennenelemente (1, 4) aufweist, und wobei Amplitudenkomponenten und Phasenkomponenten von Signalen, die durch die Antennenelemente (1, 4) übertragen und empfangen werden, jeweils derart gesteuert werden, dass eine gewünschte Richtcharakteristik erhalten wird, wobei das Verfahren die Schritte aufweist:
Steuern der Amplitudenkomponente bzw. der Phasenkomponente eines Signals, das durch eine Mobilstation übertragen und durch die adaptive Antennenvorrichtung empfangen wird, um das empfangene Signal auf eine optimale Kommunikationsqualität zu bringen; und
Berechnen einer Information über eine geschätzte Ankunftsrichtung, die durch Schätzen der Ankunftsrichtung von durch die Mobilstation übertragenen Funkwellen erhalten wird, für alle Mobilstationen in einer Zelle;
**gekennzeichnet durch** die Schritte:
Berechnen der Dichte der Mobilstationen basierend auf der für jede der Mobilstationen berechneten Information über die geschätzte Ankunftsrichtung; und
Steuern der Richtcharakteristik und der Sendeleistung eines Sendesignals zum Kompensieren einer Schrumpfungserscheinung der Zelle, die einen Bereich (14) mit einer hohen Mobilstationsdichte aufweist.

6. Verfahren nach Anspruch 5, wobei das Sendesignal einen Zellenidentifizierungskanal, der zum Übertragen eines Identifizierungssignals verwendet wird, um zu ermöglichen, dass eine Mobilstation die Zelle identifizieren kann, und einen Meldungskanal aufweist, der zum Übertragen allgemeiner Information zum Registrieren der Position der Mobilstation verwendet wird.

7. Verfahren nach Anspruch 5 oder 6, ferner mit dem Schritt zum Steuern der Richtcharakteristik und der Sendeleistung des Sendesignals zum Erweitern einer Zelle in Richtung eines Bereichs (14) mit einer hohen Mobilstationsdichte und zum Kompensieren einer aufgrund der Schrumpfungserscheinung verursachten Zellenreduzierung.

8. Verfahren nach Anspruch 5 oder 6, ferner mit dem Schritt zum Übertragen von Sendesignalen zum Kompensieren einer Schrumpfungserscheinung, wobei die Sendesignale die gleiche Information und die gleiche Phase aufweisen, in Richtung eines Bereichs (14) mit einer hohen Mobilstationsdichte.

## Revendications

1. Dispositif d'antenne adaptatif pour une station de base dans un système de communication mobile, dans lequel une pluralité d'éléments d'antenne (1, 4) est prévue, et dans lequel les composantes d'amplitude et les composantes de phase de signaux transmis et reçus par le biais desdits éléments d'antenne (1, 4) sont respectivement commandées de façon à obtenir des caractéristiques de directivité souhaitées, le dispositif comprenant :
un récepteur en bande de base (3) pour créer un signal de commande et calculer des informations de direction d'arrivée estimée qui sont un résultat de l'évaluation de la direction d'arrivée d'ondes radio émises par une station mobile, ledit signal de commande commandant respectivement la composante d'amplitude et la composante de phase d'un signal reçu par ledit dispositif d'antenne adaptatif envoyé par une station mobile à l'intérieur d'une cellule dans le but d'amener ledit signal reçu à une qualité de communication optimum ; **caractérisé par** :
un dispositif de stockage (7) pour stocker momentanément lesdites informations de direction d'arrivée estimée pour chacune desdites stations mobiles, calculées par ledit récepteur en bande de base (3) ; et
un contrôleur (8) pour calculer la densité desdites stations mobiles sur la base desdites informations de direction d'arrivée estimée stockées dans ledit dispositif de stockage (7) et pour commander les caractéristiques de directivité et la puissance de transmission d'un signal de transmission dans le but de compenser un phénomène de retrait de ladite cellule ayant une zone de stations mobiles de densité élevée (14).

2. Dispositif d'antenne adaptatif selon la revendication 1, dans lequel ledit contrôleur (8) crée un signal de commande qui commande la caractéristique de directivité et la puissance de transmission d'un canal d'identification de cellule ainsi que la caractéristique de directivité et la puissance de transmission d'un canal de notification, ledit canal d'identification de cellule étant utilisé pour transmettre un signal d'identification destiné à permettre à une station mobile d'identifier ladite cellule, ledit canal de notification étant utilisé pour transmettre des informations communes destinées à cataloguer la localisation de ladite station mobile.

3. Dispositif d'antenne adaptatif selon la revendication 1 ou 2, dans lequel ledit contrôleur (8) crée un signal de commande destiné à commander ladite caractéristique de directivité et ladite puissance de transmission, moyennant quoi une cellule est agrandie dans la direction d'une zone ayant une densité élevée (14) desdites stations mobiles, et moyennant quoi une réduction de cellule due au dit phénomène de retrait est compensée.

4. Dispositif d'antenne adaptatif selon la revendication 1 ou 2, dans lequel ledit contrôleur (8) transmet des signaux de transmission, dans le but de compenser un phénomène de retrait, ayant les mêmes informations et la même phase dans la direction d'une zone ayant une densité élevée (14) desdites stations mobiles.

5. Procédé de commande d'un dispositif d'antenne adaptatif dans une station de base d'un système de communication mobile comprenant une pluralité d'éléments d'antenne (1, 4), dans lequel les composantes d'amplitude et les composantes de phase de signaux transmis et reçus par le biais desdits éléments d'antenne (1, 4) sont respectivement commandées de façon à obtenir des caractéristiques de directivité souhaitées, ledit procédé comprenant les étapes consistant à :
commander respectivement la composante d'amplitude et la composante de phase d'un signal reçu par ledit dispositif d'antenne adaptatif et envoyé par une station mobile dans le but d'amener ledit signal reçu à une qualité de communication optimum, et calculer des informations de direction d'arrivée estimée qui sont un résultat de l'évaluation de la direction d'arrivée d'ondes radio émises par la station mobile, pour chacune de l'ensemble des stations mobiles à l'intérieur d'une cellule ; **caractérisé par** les étapes consistant à :
calculer la densité desdites stations mobiles sur la base desdites informations de direction d'arrivée estimée calculées pour chacune desdites stations mobiles ; et
commander la caractéristique de directivité et la puissance de transmission d'un signal de transmission dans le but de compenser un phénomène de retrait de ladite cellule ayant une zone de stations mobiles de densité élevée (14).

6. Procédé de commande d'un dispositif d'antenne adaptatif selon la revendication 5, dans lequel ledit signal de transmission comprend un canal d'identification de cellule qui est utilisé pour transmettre un signal d'identification destiné à permettre à une station mobile d'identifier ladite cellule, ainsi qu'un canal de notification qui est utilisé pour transmettre des informations communes destinées à cataloguer la localisation de ladite station mobile.

7. Procédé de commande d'un dispositif d'antenne adaptatif selon la revendication 5 ou 6, comprenant en outre l'étape consistant à :
commander ladite caractéristique de directivité et ladite puissance de transmission dudit signal de transmission de façon à agrandir une cellule dans la direction d'une zone ayant une densité élevée (14) desdites stations mobiles, et de façon à compenser une réduction de cellule due au dit phénomène de retrait.

8. Procédé de commande d'un dispositif d'antenne adaptatif selon la revendication 5 ou 6, comprenant en outre l'étape consistant à transmettre des signaux de transmission dans le but de compenser un phénomène de retrait ayant les mêmes informations et la même phase que la direction d'une zone ayant une densité élevée (14) desdites stations mobiles.
